Europäisches Patentamt

European Patent Office

Office européen des brevets

(19)

(11) Veröffentlichungsnummer: **0 239 750 B1**

# (12) EUROPÄISCHE PATENTSCHRIFT

(45) Veröffentlichungstag der Patentschrift: **10.07.91**

(21) Anmeldenummer: **87101621.8**

(22) Anmeldetag: **06.02.87**

(51) Int. Cl.5: **C03C 17/36, C23C 14/18, C23C 14/06, G02B 1/10**

(54) **Verfahren zum Herstellen einer vorgespannten und/oder gebogenen Glasscheibe mit Platinbeschichtung oder dergleichen.**

(30) Priorität: **28.02.86 DE 3606580**
**09.04.86 DE 3611844**

(43) Veröffentlichungstag der Anmeldung:
**07.10.87 Patentblatt 87/41**

(45) Bekanntmachung des Hinweises auf die
Patenterteilung:
**10.07.91 Patentblatt 91/28**

(84) Benannte Vertragsstaaten:
**AT BE CH DE ES FR GB GR IT LI LU NL SE**

(56) Entgegenhaltungen:
**DE-B- 1 093 163**
**DE-U- 1 734 744**
**FR-A- 1 271 584**
**GB-A- 2 126 256**
**US-A- 4 364 637**

(73) Patentinhaber: **FLACHGLAS AKTIENGESELL-SCHAFT**
**Otto-Seeling-Promenade 10-14**
**W-8510 Fürth(DE)**

(72) Erfinder: **Groth, Rolf, Dr.**
**Holzstrasse 218**
**W-4630 Bochum 6(DE)**
Erfinder: **Schmitte, Franz-Josef, Dr.**
**Rudolfstrasse 1**
**W-4605 Gelsenkirchen(DE)**

(74) Vertreter: **Goddar, Heinz J., Dr. et al**
**FORRESTER & BOEHMERT Widenmayerstrasse 4/I**
**W-8000 München 22(DE)**

## Beschreibung

Die Erfindung betrifft ein Verfahren zum Herstellen einer vorgespannten und/oder gebogenen Glasscheibe aus Natron-Kalk-Silikatglas mit reduzierter Transmission für Sonnenstrahlung, bei dem auf wenigstens eine Seite eines im wesentlichen planen, transparenten Glasträgers vor Durchführung eines thermischen Vorspann- und/oder Biegeprozesses in Luft, der bei einer Temperatur von 580° C bis 680° C, vorzugsweise 600° C bis 650° C, durchgeführt wird, eine Metallschicht aus Platin, Iridium oder Rhodium, Legierungen dieser Metalle oder aus Metalllegierungen mit einem überwiegenden Anteil wenigstens eines dieser Metalle aufgebracht wird.

Glasscheiben, welche oberflächlich eine Beschichtung aus einem Metall oder einer Metallegierung aufweisen, werden auf dem Bausektor und in der Fahrzeugverglasung verwendet, um die Transmission des unbeschichteten Glasträgers in bestimmten Spektralbereichen zu reduzieren. Die erfolgt z. B., um einen Lichtdämpfungseffekt und/oder eine Sonnenschutzwirkung zu erhalten. Dabei werden für die Metallschicht bevorzugt Metalle oder Metallegierungen aus den Elementen mit den Ordnungszahlen 22 - 28 des Periodischen Systems verwendet, wenn Glasscheiben gewünscht werden, bei denen die Beschichtung die Farbe in Durchsicht und Reflexion nicht verändert. Als Glasträger wird dabei im allgemeinen das übliche Natron-Kalk-Silikatglas verwendet. Dieses kann zusätzlich in der Masse eingefärbt sein, wie dies bei Bronze-, Grau- und Grünglas der Fall ist. Durch diese Einfärbung in der Masse ergibt sich bereits eine Grundsonnenschutzwirkung, welche durch die Beschichtung zusätzlich verstärkt wird. Insbesondere bei der Verglasung von Kraftfahrzeugen werden häufig in der Masse eingefärbte Grüngläser eingesetzt, welche sich durch eine gute Sonnenschutzwirkung in Verbindung mit hoher Lichtdurchlässigkeit auszeichnen. Bei solchen Anwendungen sind insbesondere gemischte Verglasungen interessant, wobei ein Teil der Scheiben zusätzlich beschichtet ist. So werden z. B. die Frontscheibe und die vorderen Seitenscheiben, an die gesetzliche Vorschriften hinsichtlich der Mindestlichtdurchlässigkeit gestellt werden, mit in der Masse eingefärbtem Grünglas ausgeführt. Für den hinteren Fahrzeugbereich, für den geringe Werte der Lichtdurchlässigkeit zulässig sind, werden in der Masse eingefärbte Scheiben eingesetzt, welche zusätzlich beschichtet sind, um die Sonnenschutzwirkung weiter zu erhöhen. In solchen Fällen gemischter Verglasung ist es besonders wichtig, eine Beschichtung ohne Farbstich in Reflexion und Durchsicht einzusetzen, damit die Durchsicht aus dem Innenraum nach allen Richtungen einheitlich, d. h. ohne störenden Farbstich zwischen den verschiedenen Scheiben bleibt. Das gleiche gilt auch für ein einheitliches Farbbild für das Fahrzeug bei Betrachtung von außen.

In vielen Anwendungsfällen u a. der vorstehend beschriebenen Art ist es notwendig, den Glasträger thermisch vorzuspannen. Das geschieht z. B. zur Erhöhung der mechanischen Stabilität, zur Vermeidung von Hitzesprüngen und zur Reduzierung des Verletzungsrisikos bei Scheibenbruch.

Für die Erzeugung der thermischen Vorspannung werden die in der genannten Anwendung fast ausschließlich verwendeten Scheiben aus Natron-Kalk-Silikatglas in Luft rasch auf eine Temperatur oberhalb der Transformationstemperatur des Glases aufgeheizt und anschließend abgeschreckt. Die für den Vorspannprozeß benötigten Temperaturen liegen dabei im Bereich von 580° C bis 680° C, vorzugsweise im Bereich von 600° C bis 650° C. Der gleiche Temperaturbereich wird auch benötigt, wenn die von der Glasherstellung her planen Glasscheiben einem Biegeprozeß unterzogen werden, um in bestimmten Anwendungsfällen, z. B. auf dem Automobilsektor, gebogene Glasscheiben zu erhalten. Das Aufbringen der genannten farbneutralen Metallschichten erfolgte bislang nach abgeschlossenem Vorspann- bzw. Biegeprozeß und Abkühlen der Scheiben, wobei in aller Regel Vakuum-Beschichtungsverfahren zur Anwendung kommen.

Diese Verfahrensweise, die Beschichtung im Anschluß an den Vorspann- bzw. Biegeprozeß durchzuführen, hat verschiedene Nachteile gegenüber einer Arbeitsweise, bei der zunächst die Beschichtung aufgebracht und anschließend der Vorspann- bzw. Biegeprozeß durchgeführt würde. So können im ersteren Falle nur Festmaße beschichtet werden, da vorgespannte Scheiben bekanntlich nicht zerschnitten werden können. Für die Beschichtungstechnik ist es dagegen viel günstiger, Einheitsmaße, insbesondere die Bandmaße der Glaserzeugung des Floatprozesses, zu beschichten. Im letzteren Falle lassen sich bei Vakuum-Beschichtungen die Probleme einer gleichmäßigen Schichtdicke viel leichter und einfacher lösen, als wenn Festmaße mit entsprechenden Lücken zwischen den einzelnen Scheiben im Beschichtungsfeld beschichtet werden. Hinzu kommt, daß der Transport solcher Einheitsmaße durch die Beschichtungsanlagen weniger aufwendig ist, als wenn Einzelstücke verschiedener Abmessungen transportiert werden müssen.

Ein weiterer Nachteil besteht darin, daß durch die hohen Temperaturen des Vorspann- bzw. Biegeprozesses Verunreinigungen auf der Glasoberfläche häufig mit ihr eine so feste Bindung eingehen, daß sie bei der anschließenden Oberflächenreinigung vor Durchführung des Beschichtungsprozesses nicht mehr so weit entfernt werden können, wie das für den anschließenden Beschichtungsprozeß notwendig ist. Sie sind quasi in die Glasoberfläche eingebrannt. Das führt zu einer störenden Verschlechterung der Beschichtungsqualität.

Im Falle der Beschichtung von gebogenen Scheiben sind naturgemäß die Probleme, eine ausreichende Schichtgleichmäßigkeit zu bekommen, besonders groß, weil sich Winkel und Abstand zu den Beschichtungsquellen durch die Krümmung der Scheiben zusätzlich verändern. Hinzu kommt, daß der Aufwand für Vakuum-Beschichtungsanlagen für die Beschichtung gebogener Scheiben wesentlich größer als der für die Beschichtung planer Scheiben ist, da Eingangs- und Ausgangsschleusen sowie Schleusen zwischen verschiedenen Beschichtungsstationen wesentlich breiter als beim Beschichten von planem Glas ausgebildet werden müssen.

Aus den genannten Gründen hat eine Verfahrensweise, bei welcher planes Glas, insbesondere in Form von Einheitsabmessungen, beschichtet und anschließend - insbesondere nach Herstellung der Festmaße durch Auftrennen - vorgespannt bzw. gebogen wird, beträchtliche Vorteile. Diese Vorgehensweise ist jedoch bei den wegen der Farbneutralität bevorzugt eingesetzten Metallschichten aus Metallen oder Metallegierungen der Elemente mit den Ordnungszahlen 22 - 28 bislang nicht möglich gewesen, weil durch die erforderlichen Temperaturen oberhalb von 580° C störende Schichtveränderungen - insbesondere durch die Oxidation der Schichten - hervorgerufen werden. Dies ergibt sich z. B. aus der DE-OS 17 71 223. Sie beschreibt ein Verfahren zur Herstellung von Oxidschichten, nach welchem durch Vakuum-Aufdampfung hergestellte Metallschichten bzw. suboxidische Schichten dieser Metalle, insbesondere Schichten aus der Gruppe der Metalle Kobalt, Eisen, Mangan, Cadmium, Wismut, Kupfer, Gold, Blei und Nickel einem Wärmebehandlungsschritt bei Temperaturen zwischen 315° C und 677,5° C unterzogen und dadurch in die entsprechenden Oxide umgewandelt werden. Durch die Umwandlung in die Oxide erhöht sich jedoch die Transmission der Schichten, insbesondere im nahen Infraroten. Damit verschlechtert sich in unerwünschter Weise die Sonnenschutzwirkung gegenüber der von Metallschichten.

Neben den genannten Metallschichten wurden auch Kombinationen dieser Schichten mit transparenten Oxidschichten vorgeschlagen. So kann auf der dem Glasträger abgewandten Seite der Metallschicht eine transparente Oxidschicht als Schutzschicht zur Verbesserung der mechanischen Eigenschaften oder bei Ausbildung als Viertelwellenlängenschicht für das sichtbare Gebiet als Entspiegelungsschicht zur Erhöhung der selektiven Transmission vorgesehen sein. Eine derartige Schichtanordnung ist beispielsweise aus der US-PS 38 46 152 grundsätzlich bekannt. Durchgeführte Untersuchungen haben ergeben, daß auch bei einer solchen Anordnung keine ausreichende Stabilität erreicht werden kann, wenn diese Schichtanordnungen Temperaturbelastungen ausgesetzt werden, wie sie beim Vorspann- bzw. Biegeprozeß auftreten.

Für die Behebung der vorstehend beschriebenen Schwierigkeiten, nämlich bei der Verwendung von Metallen oder Metallegierungen der Elemente mit den Ordnungszahlen 22 - 28 eine Aufbringung der Beschichtung bereits vor dem Vorspann- und/oder Biegeprozeß zu ermöglichen, wurde bereits vorgeschlagen (deutsche Patentanmeldung P 35 44 840.7-45), vor dem thermischen Vorspann- und/oder Biegeprozeß auf den im wesentlichen planen Glasträger die Metallschicht mit einem überwiegenden Gehalt an einem Metall oder einer Metallegierung aus den Elementen mit den Ordnungszahlen 22 - 28 des Periodischen Systems und auf deren dem Glasträger abgewandte Seite eine Schutzschicht aus wenigstens einem Metalloxid oder Metallmischoxid aufzubringen, die, bezogen auf ein Metallatom des Metalloxids bzw. der Metalloxide, ein Sauerstoffdefizit x von $0,05 \leq x \leq 0,4$ und eine Dicke von 10 nm bis 100 nm aufweist und eine derartige Zusammensetzung hat, daß beim Vorspann- und/oder Biegeprozeß keine nennenswerte Sauerstoffdiffusion bis zu der Metallschicht stattfindet.

Zwar liegt es nahe, stattdessen zur Ermöglichung einer Vorgehensweise, den Vorspann- bzw. Biegeprozeß erst nach dem Aufbringen der Beschichtung durchzuführen, wegen ihrer Oxidationsbeständigkeit Platin, Iridium oder ggf. Rhodium zu verwenden - nicht aber transparente Gold- und/oder Silberschichten, weil diese in der Durchsicht und/oder in der Reflexion gefärbt sind und damit nicht die für viele Anwendungen erwünschte Neutralität aufweisen-, jedoch führt die Anwendung des grundsätzlich bereits aus der FR-PS 12 71 584 bekannten Verfahrens, Glasträger noch vor einem thermischen Vorspannprozeß mit Platin- oder Rhodiumschichten zu versehen und anschließend dem thermischen Vorspannprozeß zu unterwerfen, bei einem Verfahren der gattungsgemäßen Art nicht zum Erfolg. Erläuternd sei hierzu darauf hingewiesen, daß die FR-PS 12 71 584 eine Vorgehensweise beschreibt, bei der Platin- oder Rhodiumschichten, die in Durchsicht und Reflexion die für viele Anwendungen erwünschte Neutralität aufweisen, durch entsprechende Nachbehandlung in Luft bei höherer Temperatur in ihrer Haftfestigkeit verbessert werden, z. B. während eines Vorspannprozesses, wobei ferner vorgesehen sein kann, auf die Edelmetallschicht eine Schutzschicht aus einem Lack oder einer Glasur, die im Ofen eingebrannt werden kann, aufzubringen. Wird dieses Verfahren, den Glasträger mit der Platin- oder Rhodiumschicht zu versehen und alsdann einem thermischen Vorspann- und/oder Biegeprozeß zu unterwerfen, bei den beim gattungsgemäßen Verfahren vorgesehenen Schichtdicken eingesetzt, so kommt es durch den Vorspannprozeß zu störenden Schichtveränderungen. Dabei ergibt sich eine Schichttrübung, welche z. B. bei Beleuchtung mit direktem Sonnenlicht als störender Streulichtpegel zu erkennen ist.

Derartige Glasscheiben sind daher für die üblichen Sonnenschutzanwendungen in der Bau- oder Fahrzeugverglasung nicht geeignet. Hinzu kommt insbesondere bei beschichteten Glasträgern mit einer Lichtdurchlässigkeit oberhalb von etwa 40 %, bezogen auf die Lichtdurchlässigkeit des unbeschichteten Glasträgers, eine Erhöhung der Transmission für den Spektralbereich der Sonnenstrahlung und damit eine Verschlechterung der Sonnenschutzwirkung durch den Vorspann- und/oder Biegeprozeß.

Der Erfindung liegt daher die Aufgabe zugrunde, das gattungsgemäße Verfahren dahingehend weiterzubilden, daß die mit der Beschichtung des Glasträgers erst nach dem Vorspann- bzw. Biegeprozeß verbundenen verfahrensmäßigen Nachteile vermieden und ohne die Gefahr von Schichtveränderungen der Metallschicht die erforderlichen Beschichtungsmaßnahmen bereits vor dem Vorspann- und/oder Biegeprozeß durchgeführt werden können, wobei die dabei vorgesehenen verhältnismäßig hohen Transmissionswerte erhalten werden sollen.

Erfindungsgemäß wird diese Aufgabe dadurch gelöst, daß die Metallschicht in einer solchen Dicke aufgebracht wird, daß die Lichtdurchlässigkeit des aus dem Glasträger und der Metallschicht bestehenden Verbundes zwischen 10 und 90 %, insbesondere zwischen 30 und 90 %, derjenigen des Glasträgers allein beträgt; und daß auf die dem Glasträger abgewandte Seite der Metallschicht vor dem Vorspann- und/oder Biegeprozeß in einem separaten Beschichtungsschritt eine Oxid-Stabilisierungsschicht aus oder mit einem überwiegenden Gehalt an wenigstens einem Metalloxid oder Metallmischoxid, vorzugsweise aus der Gruppe Bi, In, Ni, Sb, Sn, Ta, Ti und Zn mit einer Dicke von 2 bis 20 nm aufgebracht wird.

Dabei kann vorgesehen sein, daß die Stabilisierungsschicht in einer Dicke von höchstens 15 nm aufgebracht wird.

Weiterhin sieht die Erfindung gegebenenfalls vor, daß die Stabilisierungsschicht in einer Dicke von höchstens 12 nm aufgebracht wird.

Die Erfindung schlägt ferner auch vor, daß für die Stabilisierungsschicht $In_2O_3$, Mischoxide der Metalle Indium und Zinn, $Sb_2O_3$ oder $Bi_2O_3$ verwendet wird bzw. werden.

Nach der Erfindung kann ferner allgemein so vorgegangen werden, daß die Beschichtung des transparenten Glasträgers durch Vakuum-Beschichtung erfolgt.

Dabei kann vorgesehen sein, daß die Stabilisierungsschicht durch reaktive Kathodenzerstäubung, insbesondere reaktive MAGNETRON-Kathodenzerstäubung, aufgebracht wird.

Der Erfindung liegt die überraschende Erkenntnis zugrunde, daß es gelingt, durch das Aufbringen der Stabilisierungsschicht die Ausbildung von Trübungseffekten in der dünnen Edelmetallschicht zu unterbinden. Die Ursachen für die Wirkung der Stabilisierungsschicht sind nicht bekannt. Es kann sich zumindest nicht um eine Schutzwirkung in dem Sinne handeln, daß durch die Oxidschicht im wesentlichen die Diffusion von Sauerstoff aus der Luft zu der Edelmetallschicht verhindert wird, denn bei einem derartigen Mechanismus bliebe es unverständlich, weshalb dickere, "offene" Edelmetallschichten, wie sie offenbar bei dem Verfahren nach der FR-PS 12 71 584 eingesetzt werden, nicht von den störenden Schichtveränderungen betroffen sind, so daß dort auch ohne das Vorhandensein einer Stabilisierungsschicht, wie sie die Erfindung vorschlägt, ein Vorspannen des beschichteten Glasträgers nach dem Aufbringen der Metallschicht erfolgen kann.

Überraschend ist ferner, daß für die Wirkung der Stabilisierungsschicht bereits sehr geringe Schichtdicken ausreichen, wobei die erforderliche Mindestschichtdicke etwa 2 nm beträgt. Dies ist ein Vorteil; denn in diesem Bereich geringer Schichtdicken werden die optischen Daten, insbesondere die Neutralität in Durchsicht und Reflexion, der Metallschicht noch nicht durch Interferenzwechselwirkung mit der dielektrischen Stabilisierungsschicht gestört. Derartige visuell störende Interferenzeffekte treten bekanntlich erst Schichtdicken oberhalb von 15 nm, insbesondere oberhalb von 20 nm, auf. Die Tatsache, daß bereits sehr geringe Oxidschichtdicken für die Durchführung des erfindungsgemäßen Verfahrens ausreichen, bringt auch hinsichtlich der Verfahrensführung beträchtliche Vorteile mit sich; denn der Beschichtungsprozeß kann damit mit erheblichen Toleranzen hinsichtlich der Schichtdicke geführt werden, ohne daß durch die Schichtdickenschwankungen eine Veränderung der technischen Daten und des Aussehens der Beschichtung hervorgerufen würde. Dies ist für die Beschichtung großer Glastafeln, um die es sich bei den interessierenden Anwendungen fast ausschließlich handelt, ein großer Vorteil, da die Probleme der Schichtdickengleichmäßigkeit im allgemeinen mit wachsenden Scheibenabmessungen zunehmen.

Bei der Erfindung kann ggf. zwischen dem Glasträger und der Metallschicht eine zusätzliche Oxidschicht angeordnet werden, um die Haftfestigkeit der Beschichtung zu verbessern, wobei derartige Oxidschichten an sich z. B. aus der DE-Anm. L 13 792 VIII d als Haftschichten für Metallschichten zur Verbesserung der elektrischen Leitfähigkeit der Metallschichten bekannt sind. Aus dem DE-GM 17 34 744 ist ferner bereits eine Glasscheibe mit Platinbeschichtung und aufgebrachter oxidischer Schutzschicht bekannt, welche die Platinbeschichtung gegen mechanische und chemische Beanspruchungen schützen soll, ohne daß sich dieser Literaturstelle ein Hinweis auf die Wirkungsweise der erfindungsgemäß vorgeschlagenen Stabilisierungsschicht bei relativ dünnen Metallschichten der beim erfindungsgemäßen Verfahren vorgesehenen Art entnehmen ließe.

Für die Stabilisierungsschicht haben sich bei der Durchführung des erfindungsgemäßen Verfahrens insbesondere Schichten aus $In_2O_3$, Mischoxidschichten der Metalle Indium und Zinn, $Sb_2O_3$-Schichten und $Bi_2O_3$-Schichten bewährt, da sich hiermit u.a. eine besonders harte und abriebfeste Beschichtung erhalten läßt, wie sie für die weitere Manipulation der Glasscheiben nach Durchführung des Vorspann- bzw. Biegeprozesses besonders vorteilhaft ist. Neben Platin, welches sich als Material für die Metallschicht besonders bewährt hat, sind hierfür auch Iridium und ggf. Rhodium sowie Legierungsschichten der Metalle Platin, Iridium und ggf. Rhodium geeignet. Ferner können auch Legierungsschichten eingesetzt werden, bei denen den vorgenannten Metallen bzw. deren Legierungen weniger edle Metalle zugesetzt werden. Diese Zusätze müssen allerdings so gering sein, daß der Edelmetallcharakter weitgehend erhalten bleibt, so daß die maximalen Zusätze an weniger edlem Metall entsprechend der von Tamman aufgestellten Regel bei etwa 50 Atomprozent liegen (G. Tamman, "Lehrbuch der Metallkunde", IV. Auflage (1932), Leopold Frost, Leipzig, S. 428 ff.).

Die Herstellung der Beschichtung nach dem erfindungsgemäßen Verfahren erfolgt in aller Regel durch Vakuum-Beschichtung. Die Schichten können dabei durch Verdampfen aus widerstandsgeheizten Verdampfervorrichtungen oder aber auch durch Elektronenstrahlverdampfung aufgebracht werden. Ferner eignen sich Kathodenzerstäubung als Gleichstrom- oder Niederfrequenzzerstäubung, insbesondere aber auch Hochfrequenz- und MAGNETRON- Kathodenzerstäubung. Die Metall- bzw. Metallegierungsschichten können dabei entweder durch direktes Verdampfen oder Zerstäubung in neutraler Atmosphäre hergestellt werden. Für die Herstellung der Oxidschichten eignet sich das Verfahren der reaktiven Verdampfung. Geeignet ist ferner das Verfahren der reaktiven Kathodenzerstäubung, insbesondere das Verfahren der reaktiven MAGNETRON-Kathodenzerstäubung, bei welchen entsprechende Metall- bzw. Metallegierungstargets in einer Atmosphäre, welche u.a. Sauerstoff enthält, zerstäubt werden.

Im übrigen sei noch erwähnt, daß sich bei besonders langsamer Prozeßführung, wie sie beim Biegen häufig angewendet wird, das erfindungsgemäße Verfahren auch bei Lichtdurchlässigkeiten von weniger als 30 %, z. B. 20 %, mit Vorteil einsetzen läßt, weil sich auch hierbei ein günstiger Einfluß auf die ansonsten unvermeidlichen Trübungsvorgänge erzielen läßt.

Weitere Merkmale und Vorteile der Erfindung ergeben sich aus der nachfolgenden Beschreibung, in der u.a. Ausführungsbeispiele unter Bezugnahme auf die schematische Zeichnung im einzelnen erläutert sind. Dabei zeigt:

Fig. 1 ein Ausführungsbeispiel einer nach dem erfindungsgemäßen Verfahren herstellbaren Glasscheibe im Schnitt senkrecht zur Scheibenebene; und

Fig. 2 die spektralen Transmissionskurven einer nach dem Stand der Technik hergestellten Glasscheibe vor und nach Durchführung des Vorspannprozesses.

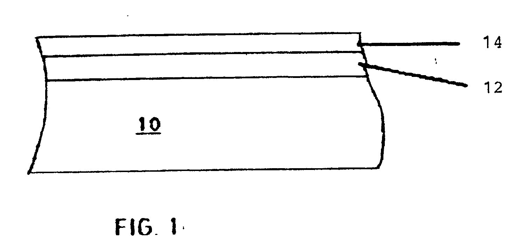

Wie Fig. 1 zeigt, weist die dort gezeigte Glasscheibe einen transparenten Glasträger 10 aus Natron-Kalk-Silikatglas auf, der eine Metallschicht 12 aus Platin trägt. Auf die dem Glasträger 10 abgewandte Seite der Metallschicht 12 ist eine Stabilisierungsschicht 14 aus $In_2O_3$ aufgebracht.

Beispiel 1

In einer Vakuum-Beschichtungsanlage, welche mit Beschichtungseinrichtungen für MAGNETRON-Kathodenzerstäubung ausgerüstet war, wurden auf eine Floatglasscheibe im Format 10 cm x 10 cm nacheinander folgende Schichten aufgebracht: Zunächst eine Platinschicht in einer Dicke von 3,2 nm durch Zerstäubung von einem Platintarget in Argon-Atmosphäre bei einem Druck von $5 \cdot 10^{-3}$ mbar. Anschließend wurde auf die Platinschicht als Stabilisierungsschicht eine Antimonoxidschicht durch reaktive Zerstäubung eines Antimontargets in einer Argon-Sauerstoff-Atmosphäre mit 50 % Sauerstoffanteil bei einem Druck von $4 \cdot 10^{-3}$ mbar aufgebracht. Die Dicke der Antimonoxidschicht betrug dabei 6 nm.

Die beschichtete Scheibe wies in der Durchsicht und in der Reflexion ein neutrales Aussehen auf. Die Lichtdurchlässigkeit der beschichteten Scheibe betrug 60 %, wogegen die unbeschichtete Scheibe eine Lichtdurchlässigkeit von 90 % aufwies. Die beschichtete Scheibe wurde anschließend in einem Vorspann-Ofen auf 600° C aufgeheizt und abgeschreckt. Durch den Vorspannprozeß veränderten sich das Aussehen und die Lichtdurchlässigkeit der Scheibe praktisch nicht.

Beispiel 2

Es wurde wie in Beispiel 1 verfahren, mit dem Unterschied, daß keine Antimonoxidstabilisierungsschicht aufgebracht wurde. Die beschichtete Scheibe wies in Durchsicht und in Reflexion das gleiche neutrale Aussehen auf wie in Beispiel 1. Auch die Lichtdurchlässigkeit betrug 60 %.

Wie in Beispiel 1 wurde die beschichtete Scheibe anschließend vorgespannt. Nach diesem Prozeß wies die Beschichtung eine Trübung auf, welche bei Beleuchtung mit einer Projektionslampe als störender Streulichtpegel zu erkennen war. Außerdem hatte sich die Lichtdurchlässigkeit auf 68 % erhöht.

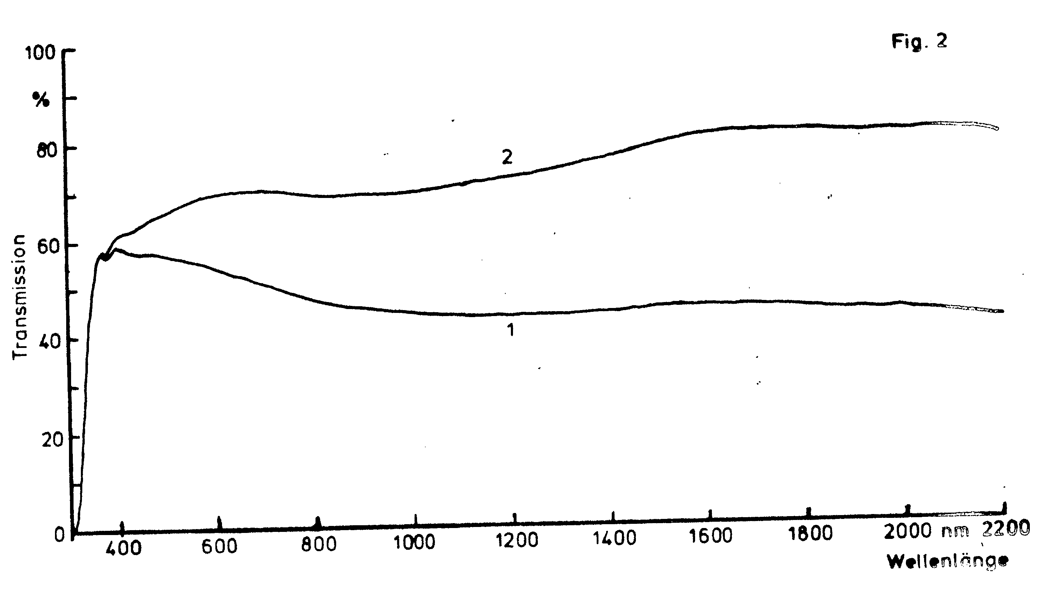

In Fig. 2 sind die spektralen Transmissionskurven vor Durchführung des Vorspannprozesses (Kurve 1) und danach (Kurve 2) wiedergegeben. Sie zeigen, daß die Sonnenschutzwirkung durch das Vorspannen erheblich reduziert wird.

Beispiel 3

In einer Vakuumanlage, wie in Beispiel I beschrieben, wurden nacheinander folgende Schichten auf eine Floatglasscheibe von 10 cm x 10 cm aufgebracht:
- eine $In_2O_3$-Schicht von 5 nm Dicke durch reaktive Zerstäubung eines Indiumtargets bei einem Druck von $4 \cdot 10^{-3}$ mbar in einer Argon-Sauerstoffatmosphäre der Zusammensetzung 60 % Ar und 40 % $O_2$
- eine Platinschicht von 7 nm Dicke durch Zerstäubung eines Platintargets in einer Argon-Atmosphäre bei einem Druck von $5 \cdot 10^{-3}$ mbar
- eine $In_2O_3$-Deckschicht von 5 nm durch reaktives Zerstäuben eines In-Targets unter den gleichen Bedingungen wie bei der ersten $In_2O_3$-Schicht.

Die beschichtete Scheibe hatte eine Lichtdurchlässigkeit von 40 % und wies in der Durchsicht und in der Reflexion ein neutrales Aussehen auf.

Die beschichtete Scheibe wurde anschließend wie in Beispiel 1 vorgespannt.

Durch den Vorspannprozeß veränderten sich das Aussehen und die Lichtdurchlässigkeit der Scheibe praktisch nicht.

Beispiel 4

Es wurde wie in Beispiel 3 eine Platinschicht aufgebracht, jedoch ohne die zusätzlichen $In_2O_3$-Schichten. Auch hier betrug die Lichtdurchlässigkeit der beschichteten Scheibe 40 %.

Nach dem Vorspannen betrug zwar die Lichtdurchlässigkeit unverändert 40 %, aber die Beschichtung zeigte eine Trübung, die bei Beleuchtung mit einer Projektionslampe als störendes Streulicht sichtbar wurde. Damit ist die Beschichtung in dieser Form für die genannten Anwendungen nicht geeignet.

Beispiel 5

Es wurde ein Schichtsystem wie in Beispiel 3 aufgebracht, jedoch anstelle des reinen Platin wurde eine Schicht aus einer Platin-Silber-Legierung der Zusammensetzung 70 at % Platin und 30 at % Silber in einer Dicke von 5 nm aufgebracht.

Die beschichtete Scheibe hatte eine Lichtdurchlässigkeit von 51 % und wies ebenfalls in Durchsicht und Reflexion ein neutrales Aussehen auf.

Wie in Beispiel 3 wurde auch hier das Aussehen und die Lichtdurchlässigkeit der Scheibe durch den Vorspannprozeß praktisch nicht verändert.

**Ansprüche**

1. Verfahren zum Herstellen einer vorgespannten und/oder gebogenen Glasscheibe aus Natron-Kalk-Silikatglas mit reduzierter Transmission für Sonnenstrahlung, bei dem auf wenigstens eine Seite eines im wesentlichen planen, transparenten Glasträgers vor Durchführung eines thermischen Vorspann- und/oder Biegeprozesses in Luft, der bei einer Temperatur von 580° C bis 680° C, vorzugsweise 600° C bis 650° C, durchgeführt wird, eine Metallschicht aus Platin, Iridium oder Rhodium, Legierungen dieser Metalle oder aus Metalllegierungen mit einem überwiegenden Anteil wenigstens eines dieser Metalle aufgebracht wird, dadurch gekennzeichnet, daß die Metallschicht in einer solchen Dicke aufgebracht wird, daß die Lichtdurchlässigkeit des aus dem Glasträger und der Metallschicht bestehenden Verbundes zwischen 10 und 90 %, insbesondere zwischen 30 und 90 %, derjenigen des Glasträgers allein beträgt; und daß auf die dem Glasträger abgewandte Seite der Metallschicht vor dem Vorspann- und/oder Biegeprozeß in einem separaten Beschichtungsschritt eine Oxid-Stabilisierungsschicht aus oder mit einem überwiegenden Gehalt an wenigstens einem Metalloxid oder Metallmischoxid, vorzugsweise aus der Gruppe Bi, In, Ni, Sb, Sn, Ta, Ti und Zn mit einer Dicke von 2 bis 20 nm aufgebracht wird.

2. Verfahren nach Anspruch 1, dadurch gekennzeichnet, daß die Stabilisierungsschicht in einer Dicke von höchstens 15 nm aufgebracht wird.

3. Verfahren nach Anspruch 2, dadurch gekennzeichnet, daß die Stabilisierungsschicht in einer Dicke von höchstens 12 nm aufgebracht wird.

4. Verfahren nach einem der vorangehenden Ansprüche, dadurch gekennzeichnet, daß für die Stabilisierungschicht $In_2O_3$, Mischoxide der Metalle Indium und Zinn, $Sb_2O_3$ oder $Bi_2O_3$ verwendet wird bzw. werden.

5. Verfahren nach einem der vorangehenden Ansprüche, dadurch gekennzeichnet, daß die Beschichtung des transparenten Glasträgers durch Vakuum-Beschichtung erfolgt.

6. Verfahren nach Anspruch 5, dadurch gekennzeichnet, daß die Stabilisierungsschicht durch reaktive Kathodenzerstäubung, insbesondere reaktive MAGNETRON-Kathodenzerstäubung, aufgebracht wird.

## Claims

1. A process for the preparation of a toughened and/or curved glass pane of reduced solar transmission soda lime silicate glass, in which process, before a thermal toughening and/or bending process is performed in air at a temperature of from 580°C to 680°C, preferably from 600°C to 650°C, a metal coating of platinum or iridium or rhodium or alloys of these metals or metal alloys having a preponderant proportion of at least one of these metals is applied to at least one side of a substantially plane transparent glass support, characterised in that the metal coating is applied in a thickness such that the light transmittance of the composite embodied by the glass support on the metal coating is between 10% and 90%, more particularly between 30 and 90%, of the light transmittance of the glass support alone, and before the toughening and/or bending process and in a separate coating step an oxide-stabilizing coating consisting entirely of or having a preponderant content of at least one metal oxide or metal mixed oxide, preferably from the group of Bi, In, Ni, Sb, Sn, Ta, Ti and Zn is applied in a thickness of from 2 to 20 nm to that side of the metal coating which is remote from the glass support.

2. A process according to claim 1, characterised in that the stabilizing layer is applied in a thickness of at most 15 nm.

3. A process according to claim 2, characterised in that the stabilizing layer is applied in a thickness of at most 12 nm.

4. A process according to any of the previous claims, characterised in that mixed oxides of the metals indium and tin, $Sb_2O_3$ or $Bi_2O_3$, is or are used for the stabilizing layer $In_2O_3$.

5. A process according to any of the previous claims, characterised in that the transparent glass support is coated by vacuum coating.

6. A process according to claim 5, characterised in that the stabilizing layer is applied by reactive cathode sputter, more particularly reactive magnetron cathode sputter.

## Revendications

1. Procédé de fabrication d'une plaque de verre trempée et/ou bombée en verre de silicate calcaire natron présentant une transmission réduite au rayonnement solaire, selon lequel on applique au moins sur un côté d'un substrat de verre transparent sensiblement plan, et avant de réaliser une opération thermique de trempe et/ou de cintrage effectuée dans l'air et à une température de 580°C à 680°C, de préférence 600°C à 650°C, une couche métallique de platine, iridium ou rhodium, d'alliages de ces métaux ou d'alliages métalliques avec une part prépondérante d'au moins un de ces métaux, caractérisé en ce que la couche métallique est appliquée avec une épaisseur telle que la transparence à la lumière du composite constitué par le substrat de verre et la couche métallique se situe entre 10 et 90%, notamment entre 30 et 90%, de celle du substrat de verre seul, et par le fait que l'on applique sur le côté de la couche métallique opposé à celui qui est adjacent au substrat de verre, avant l'opération de trempe et/ou de cintrage et au cours d'une étape de revêtement séparée, une couche de stabilisation d'oxyde, constituée, ou avec une teneur prépondérante, d'au moins un oxyde métallique ou mélange d'oxydes métalliques, de préférence du groupe Bi, In, Ni, Sb, Sn, Ta, Ti et Zn, avec une épaisseur de 2 à 20 nm.

2. Procédé selon la revendication 1, caractérisé en ce que la couche de stabilisation est appliquée avec une épaisseur au plus égale à 15 nm.

3. Procédé selon la revendication 2, caractérisé en ce que la couche de stabilisation est appliquée avec une épaisseur au plus égale à 12 nm.

4. Procédé selon l'une des revendications précédentes, caractérisé en ce que l'on utilise pour la couche de stabilisation, $In_2O_3$, des mélanges d'oxydes des métaux indium et étain, $Sb_2O_3$ ou $Bi_2O_3$.

5. Procédé selon l'une des revendications précédentes, caractérisé en ce que le revêtement du substrat de verre transparent se fait par revêtement sous vide.

6. Procédé selon la revendication 5, caractérisé en ce que la couche de stabilisation est appliquée par pulvérisation cathodique réactive, et notamment par pulvérisation cathodique réactive au magnétron.

FIG. 1

Fig. 2